# EUROPEAN PATENT APPLICATION

(11) **EP 1 091 130 A2**
(43) Date of publication of application: **11.04.2001**
(21) Application number: 00308670.9
(22) Date of filing: 03.10.2000
(51) Int. Cl.: F15B 13/00, B29C 39/00

(54) **Manufacture of manifold modules or the like**

(30) Priority: 04.10.1999 GB 9923420
(71) Applicant: KV Limited, Milton Keynes, Buckinghamshire MK8 0HB (GB)
(72) Inventor: Wai, Andrew Kar-Kit, Buckingham, Bukinghamshire MK18 7JL (GB); Gray, Paul Calcott, Dunstable, Bedfordshire LU6 2AD (GB)
(74) Representative: Howden, Christopher Andrew

(57) **Abstract**

A manifold or fluid connection block for a pneumatic or hydraulic system, for example, for use in connecting valves, actuators, fluid motors or the like with one another and with a fluid pressure source or with exhaust, is manufactured by forming a solid block (10b) having one or more grooves or channels (14) formed in one face thereof, filling the grooves or channels with the temporary filling material, applying over said face and over the exposed surface of the temporary filling in said grooves a curable or settable medium (50) in a flowable condition to cover said face of said block and to adhere thereto, and subsequently removing said temporary filling material to leave desired passageways for fluid in the block. The block (10b) may be formed by moulding a polyurethane or epoxy casting resin and the curable or settable medium (50) applied over said face may be the same casting resin as is used to mould the block (14b).

## Description

This invention relates to the manufacture of components incorporating internal passageways for fluids, e.g. for liquids or gases in hydraulic or pneumatic systems, for example. However, the method of the invention is also applicable to other applications in which it is necessary to form internal passages or chambers in certain structures.

In the manufacture of pneumatic and hydraulic systems, it is often convenient to connect valves, actuators, fluid motors etc. by way of solid blocks or manifolds, rather than by individual pipes connecting such components. Such a manifold typically provides a plurality of ports, with associated mountings, for connection with the valves, conduits, etc., the manifold having internal passageways connecting such ports. In some cases, a single manifold may incorporate a relatively complex network of such internal passageways, so that the block or manifold becomes analogous to a printed circuit board in electronics manufacture, with the various hydraulic or pneumatic components connected to such manifolds being analogous to the electronic components which might be mounted on such a printed circuit board.

In the past, such a manifold has typically been produced by providing a plastics or metal, eg. aluminium, block with a flat face and machining grooves or channels across the flat face in the configuration corresponding to the desired configuration of internal passages in the manifold. Where ports for connection of external piping or components are to be provided in the block, these may be formed at the same time. Nowadays, machining of such blocks is generally carried out by CNC (computer numerically controlled ) automatic machines. After the block has been machined, a flat cover plate is secured to the block over the channelled flat surface with the interposition of a sealing gasket between the block and the cover plate, the cover plate being secured to the metal block by bolts or screws engaging in screw-threaded bores also machined in the block. Ports for connecting the internal passages to valves and the like or to conduits or other devices may also be formed through the cover plate, such ports having appropriate mounting means, such as screw-threaded connectors, etc., whereby such external conduits or devices may be secured to the manifold. However it is normally preferable to confine such ports and mountings to the block itself. Such traditional manufacturing method is fairly labour intensive and involves many machining steps and is thus expensive. The use of metal, such as aluminium, also adds to costs in the traditional manufacturing method.

A variant of the traditional manufacturing process described above dispenses with the need for bolts or screws to secure the cover plate to the metal block and dispenses also with the need for a gasket. In this variant, the cover plate is secured to the block by an appropriate adhesive or bonding agent which also serves to effect a seal between the cover plate and the block, or is solvent bonded to the block. This variant has the advantage that the cover plate and the block and require no machining to provide plain and threaded bores to receive screws or bolts, machining steps are still required to form the channels or grooves in the block. Furthermore, the parts must be cleaned thoroughly before the bonding process and the faces to be glued together appropriately prepared. Additionally, there is a risk that bonding agent expressed from between the cover plate and the block when the two components are brought together will partially or completely block some of the channels defined between the cover plate and the block. The assembly process can also be rather messy. Furthermore, the integrity of the bond between the cover plate and the block is difficult to assess, and the method is less reliable than securing the cover plate by conventional bolts or screws. Furthermore, the bonding agent may take quite a significant time, e.g. 24 hours, to harden or cure fully, and apart from the manufacturing delay involved, this makes it difficult to monitor usefully the success rate for securing the cover plates by this means.

The manufacture of a manifold in accordance with the invention is described below, by way of example, with reference to the accompanying drawings, in which:
Figure 1 is a perspective view showing schematically a conventional manifold assembly, adapted to be secured together by bolts, not shown, as described above,
Figure 2 is a schematic view, partly in section, illustrating the support of a master in a casting frame or open topped box, prior to the pouring of flexible synthetic resin, (e.g. silicone rubber) to form, about the master, a mould for the production of manifold blocks,
Figure 3 is a plan view from above of the arrangement illustrated in Figure 2,
Figure 4 is a view corresponding to Figure 2 but showing the position after the flexible synthetic resin has been poured,
Figure 5 is a view in vertical section showing the block of cured flexible synthetic resin, encompassing the master, after removal from the casting frame, and after detachment of rods defining inlet and venting passages,
Figure 6 illustrates, in vertical section, use of the flexible synthetic resin mould for moulding a first part of the manifold block,
Figure 7A shows in plan and Figure 7B shows in section along line A-A in figure 7A, said first part of the manifold block after the channels and openings therein have been filled with a soluble insert material, and
Figure 8 illustrates a subsequent manufacturing stage in which a cover plate is cast *in situ* over the component illustrated in Figures 7A and 7B.

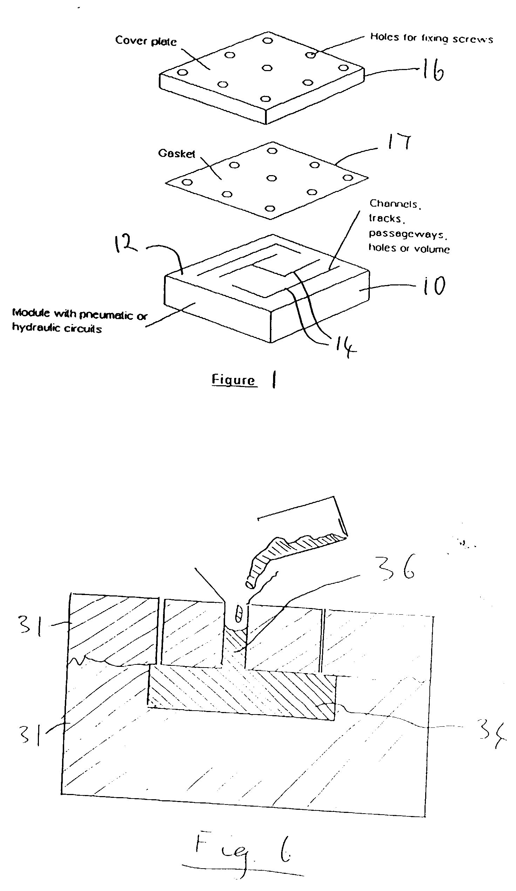

Referring to Figure 1, this shows, in a perspective "exploded" view, the construction of a conventional manifold block of the kind described above which is adapted to be secured together by bolts, not shown. In Figure 1, reference 10 denotes the metal or plastics block having a flat upper surface 12 in which are formed an arrangement of said channels or grooves 14 in a desired configuration, reference 16 denotes the cover plate, formed with holes to receive the fastening bolts (not shown) for engagement in threaded bores (not shown) in block 10. The conventional gasket is shown at 17.

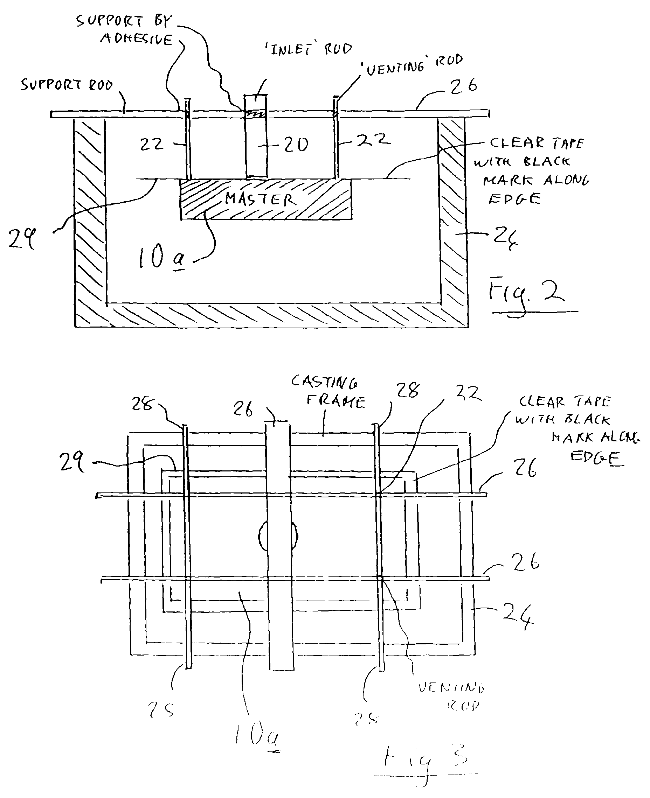

In the manufacture of a corresponding manifold by the preferred method of in accordance with the present invention, a master is first manufactured, in the form of a block which corresponds in shape and configuration to the block 10 of Figure 1, but without the bores for bolts to fasten a cover plate. To this block, which is referenced 10a in Figures 2 to 5, there are fixed, e.g. by means of adhesive of limited strength, an insert 20 (Fig 2) to define an inlet for resin in the mould to be produced and rods or wires 22 to define venting passages in the mould to be produced. The master, with block 10a and the inserts 20 and 22, is then suspended within a casting frame 24, (e.g. in the form of an open topped box), in a predetermined position within the frame, with the block portion 10a clear of the bottom and sides of the casting frame and below the level of the top of the casting frame. The master is suspended in this position by means of supporting rods 26,28 (Figures 2 and 3 ), extending across the top of the casting frame 24 and resting on the upper edges of the side walls of the casting frame. The master may be supported from such rods 26, 28 by, for example, adhesive of limited strength. Before the master is suspended in the casting frame, strips of transparent adhesive tape 29 are applied to its upper face, so as to project, in a horizontal plane, beyond at the sides of the block 10a, all around the block, as shown in Figs 2 and 3. The outer edges of these strips are marked with a marking ink to enhance visibility. As illustrated in Figure 4, a mould is then formed around the master 10a by pouring, in a liquid state, synthetic resin which will set to form a flexible mass. Currently silicone rubber is preferred as the flexible resin and thus the mould is preferably formed by pouring, in a liquid state, a silicone rubber resin material 31 into the casting frame to cover the master entirely, except for the upper ends of the inserts 20, 22. The silicone rubber compound is then allowed to set. (Suitable silicone rubber resin systems for use in forming moulds are well known and generally comprise a liquid silicone rubber resin and liquid hardener which are mixed together immediately before use).

The silicone rubber used is transparent, even when set, and thus the master is visible within the set silicone rubber block.

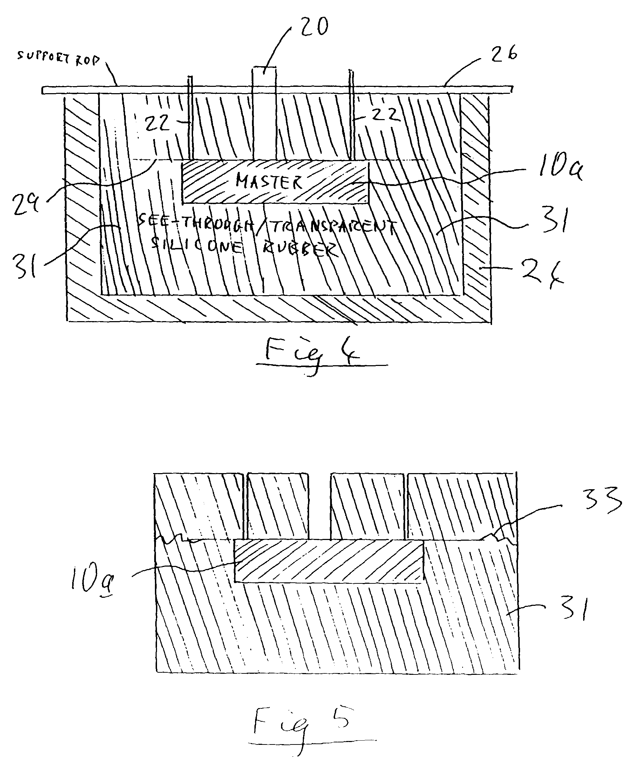

After extraction of the solidified silicone rubber block from the casting frame, and removal of the insert 20 and rods 22, the silicone rubber is cut from the master manually by extending a blade horizontally into the rubber block substantially in the plane of the adhesive tape, an operation assisted by the visibility of the ink marking on the tape edge. The silicone rubber moulding material is cut all the way round the master along the visible parting line defined by the tape, dividing the silicone rubber material into two complementary halves between which the master is located, as shown in Figure 5 in which the parting faces defined by such cutting are referenced 33. The master is then separated carefully from the two halves of the body of silicone rubber. The two halves of the rubber block then form a two-part mould for a subsequent moulding of manifold blocks as described below. The portions of adhesive tape projecting beyond the edges of the block 10a define, in the resulting mould, portions of the parting faces between the two mould parts adjacent the mould cavity, which portions are well defined and substantially planar, whatever irregularities may result in the regions of these parting faces further from the mould cavity as a result of the manual cutting operation.

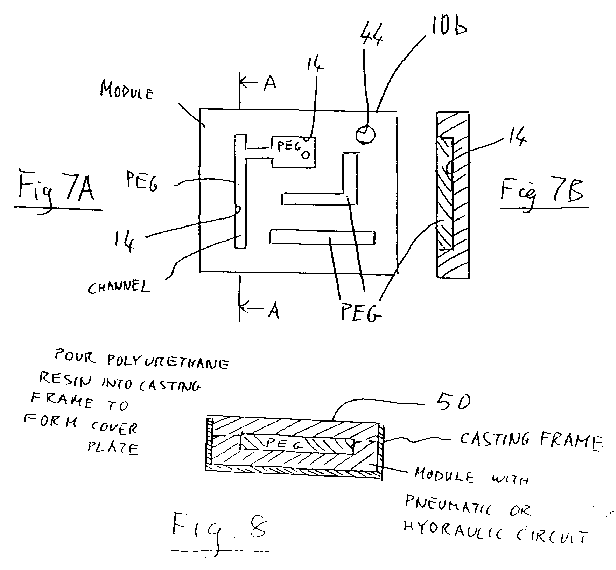

To mould a manifold module, the two halves of the silicone rubber mould produced as described above are taped or sealed together so that the complementary irregularities formed in the parting "face" by cutting are in mating engagement, thus ensuring correct registry of the two mould halves. As shown in Figure 6, a thermosetting plastics casting compound is poured into the mould cavity through the port 36 left by the insert 20, to fill the mould cavity. This moulding operation is preferably effected under vacuum to avoid air inclusions in the mould which might render the cast product unusable. The plastics casting resin 34 used is preferably a polyurethane or epoxy resin, the liquid casting resin being formed by mixing the two components of a two-component, plastics resin/hardener system, the resin and hardener being mixed immediately before casting in the appropriate ratio and at the recommended temperature, also in a vacuum environment. After curing the resin for the appropriate period, the two parts of the silicone rubber mould are separated and the moulded plastics block is removed. The plastics projections defined by the plastics material which occupied the port 36 and the passages defined originally by the rods or wires 22 are then removed to provide an item, referenced 10b in Figures 7A, 7B and 8, which, for convenience, is referred to herein as an intermediate product and which has a configuration corresponding to that of the original master block 10a. The procedure described above is known for the moulding of plastics components generally and is thus not described in any greater detail.

The channels and grooves 14 formed in the surface of the resulting intermediate product 10b are then, in accordance with the invention, filled with a temporary, soluble filling material, for example PEG (polyethylene glycol), for example by placing the intermediate product in a container preferably conforming closely to the sides of the intermediate product and extending above the upper, channelled surface thereof and pouring the molten PEG over the block 10b, under vacuum, until the PEG reaches a level just above the surface of the block 10b, the PEG thereby filling the channels formed in the product 10b and likewise filling the bores, such as bore 44 shown in Figure 7B, extending from such channels to ports provided on the rear ( un-channeled ) surface of the product 10b. After cooling and solidification of the PEG, the excess PEG is removed from the upper surface of the intermediate product 10b so that the clean polyurethane or epoxy casting material is exposed except in the channels, holes, etc. in the intermediate product which are occupied by PEG and the PEG has its upper surface flush with the upper surface of the exposed polyurethane or epoxy resin. This stage is illustrated in Figures 7A and 7B. The intermediate product 10b is then placed within a casting frame, (see Figure 8), conforming closely to the bottom and side surfaces of block 10b, leaving the upper surface, with the PEG filled grooves, etc., exposed. A "cover plate" 50 is then formed in situ by pouring a layer of resin under vacuum over the intermediate product 10b, as illustrated in Figure 8, to cover the upper surface of block 10b and thus cover the PEG within the channels etc. The resin is preferably identical with that used to cast the intermediate product, that is to say, the resin poured comprises a resin/hardener mixture identical with that poured into the silicone rubber mould to form the intermediate product 10b and sets for form a solid resin physically and chemically identical with that forming the intermediate product 10b and bonded strongly thereto, so that the result is effectively a unitary module having the desired fluid passages defined internally, but with these passages being filled with PEG. Finally, the PEG is removed from these passages within the module by washing the module in warm water to dissolve the PEG. After cleaning up the surface of the module, the product is complete and ready for use.

It will be understood that the ports in the exterior of the module and the passages extending into the internal passages in the module from these ports are preferably formed in the intermediate product 10b rather than in the poured "cover plate" so that there is no need to form such ports in the "cover plate".

It will also be appreciated that, by using a plurality of masters, it is possible to produce moulds in the manner described having a plurality of mould cavities so that a plurality of intermediate products 10b can be produced in one moulding step.

The method, in accordance with the preferred embodiment, of making manifold modules, and the resulting manifold modules, have the following advantages:-
The manufacturing technique is simple and inexpensive;
The tooling, i.e. the synthetic rubber moulds, is low-cost and investment costs for equipment are low. Nevertheless the manufacturing technique permits volume production;
There is no size constraint on the size of modules which can be produced;
The plastics for the manifold modules can be dyed with any of a range of different colours, such as black, blue, brown , yellow, etc.;
The moulded manifold modules are electrically neutral, (i.e. do not hold electrical charge) and have good mechanical properties;
The preferred technique is suitable for low and medium batch sizes and entails relatively low labour costs, material costs, etc., as compared with conventional techniques;
Surface finish and surface preparation are not critical;
The manufacturing process affords consistent results;
Masters can be manufactured simply, using CNC machining equipment or by rapid prototyping.

The features disclosed in the foregoing description, in the following claims and/or in the accompanying drawings may, both separately and in any combination thereof, be material for realising the invention in diverse forms thereof.

## Claims

1. A method of manufacturing a manifold or fluid connection block comprising forming a solid block having one or more grooves or channels formed in one face thereof, filling the grooves or channels with a temporary filling material, applying over said face and over the exposed surface of the temporary filling in said grooves a curable or settable medium in a flowable condition to cover said face of said block and to adhere thereto, and subsequently removing said temporary filling material to leave desired passageways for fluid in the block.

2. A method according to claim 1, wherein said curable or settable medium has the same composition as the material of said block.

3. A method according to claim 2, wherein said block is of a plastics material and said curable or settable material comprises the same plastics material in a flowable state or comprises the curable precursor of the same plastics material as forms said block.

4. A method according to claim 1, wherein said solid block is formed, complete with said grooves or channels, by a moulding step.

5. A manifold or fluid connection block formed by the method of claim 1.
